# EUROPÄISCHE PATENTANMELDUNG

(11) **EP 1 163 875 A1**
(43) Veröffentlichungstag der Anmeldung: **19.12.2001**
(21) Anmeldenummer: 01112111.8
(22) Anmeldetag: 17.05.2001
(51) Int. Cl.: A47L 17/06, A47L 13/022, B25G 1/10, A47J 43/28, A47L 13/08

(54) **Reinigungsschaber**

(30) Priorität: 30.05.2000 DE 10026824
(71) Anmelder: Schott Glas, 55122 Mainz (DE); CARL-ZEISS-STIFTUNG trading as SCHOTT GLAS, 55122 Mainz (DE)
(72) Erfinder: Schultheis, Bernd, Dipl.-Ing., 55270 Schwabenheim (DE); de Witzmann, Monica, Dipl.-Ing., 55268 Nieder-Olm (DE)
(74) Vertreter: Gaiser, Hartmut, Dipl.-Ing.

(57) **Zusammenfassung**

Ein Reinigungsschaber für Glas- oder glasähnliche Oberflächen mit einem Handgriffbereich 1 und einem Arbeitsbereich 2 zur Aufnahme einer Klinge 8 soll beim Kontakt mit einer heißen Oberfläche auf dieser keine Rückstände oder Schäden hinterlassen und mit ihm soll sich auch eine heiße Oberfläche angenehm reinigen lassen. Hierfür ist der Handgriffbereich 1 und der Arbeitsbereich 2 aus einem duroplastischen Kunststoffmaterial geformt.

## Beschreibung

Die Erfindung betrifft einen Reinigungsschaber nach dem Oberbegriff des Anspruchs 1.

Es sind unter der Marke CERA-Quick der Anmelderin Reinigungsschaber für Glaskeramik-Kochflächen bekannt. Die bekannten Reinigungsschaber sind aus Metall gefertigt. Der metallene Handgriffbereich ist kurz und teilweise scharfkantig. Dieser Reinigungsschaber hat den Vorteil, dass man ihn auf einer heißen Glaskeramikplatte versehentlich liegenlassen kann, ohne dass er temperaturbedingt Rückstände an der Glaskeramikplatte des Kochherdes zurücklässt. Nachteilig ist allerdings, dass der Schaber dabei wegen der Leitfähigkeit des Metalls sehr heiß wird, so dass sich der Benutzer möglicherweise verbrennt, wenn er den heißen Schaber aufnimmt. Außerdem besteht eine Verbrennungsgefahr aufgrund des relativ kurzen Griffes, wenn die heiße Oberfläche mittels des Schabers gereinigt wird.

Es sind auch Reinigungsschaber marktbekannt, die aus thermoplastischem Kunststoff hergestellt sind. Lässt man solche Reinigungsschaber auf einer heißen Glaskeramikplatte versehentlich liegen, dann schmelzen sie an, wodurch insbesondere die zu reinigende Glaskeramik-Oberfläche beschädigt wird. Es können dabei beim Abkühlen sogenannte Ausmuschelungen in der Oberfläche entstehen.

In der DE 41 41 593 A1 ist der Aufbau eines Reinigungsschabers beschrieben. Dieser Schaber ist zur Reinigung von kalten Oberflächen vorgesehen. Der Schaber besteht aus elastischem Kunststoffmaterial, das sich nicht für den Einsatz an heißen Oberflächen, insbesondere an Glaskeramik-Kochflächen, eignet.

In der Literaturstelle Schröter, W.: Taschenbuch der Chemie, 10. Aufl., 1983, Deutsch-Verlag, Thun, Frankfurt/M., S.582-590, ist angegeben, dass sich Duroplaste ohne vorheriges Erweichen zersetzen und unlöslich sind. Außerdem ist dort angegeben, dass Melamin bis zu einer Temperatur von 130°C anwendbar ist.

Aufgabe der Erfindung ist es, einen Reinigungsschaber der eingangs genannten Art vorzuschlagen, der beim Kontakt mit einer heißen Oberfläche auf dieser keine Rückstände hinterlässt und insbesondere bei Glaskeramik-Kochflächen zu keiner Beschädigung der Oberfläche führt und selbst nicht beschädigt wird und mit dem sich auch eine heiße Oberfläche angenehm reinigen lässt.

Erfindungsgemäß ist obige Aufgabe durch die Merkmale des Anspruchs 1 gelöst.

Dieser Reinigungsschaber lässt sich preiswert, beispielsweise in einem Fließpressverfahren, herstellen. Dabei kann dem Handgriffbereich eine ergonomisch günstige Form gegeben werden und die Stabilität lässt sich durch Versteifungsrippen erhöhen.

Als duroplastischer Kunststoff eignen sich Melaminharze oder ungesättigte Polyesterharze. Versuche habe gezeigt, dass der Schaber selbst bei einem minutenlangen Kontakt mit einer etwa 500 bis 600°C heißen Glaskeramik- Kochfläche diese nicht durch Ausmuschelungen oder chemischem Angriff schädigt. Aufgrund der hohen thermischen Beständigkeit des duroplastischen Kunststoffs hinterlässt der Schaber an der heißen Kochfläche keine Rückstände.

Der Reinigungsschaber lässt sich aufgrund der im Vergleich zum Metall geringen Wärmeleitfähigkeit auch auf heißen Oberflächen angenehm handhaben, weil er nicht zu heiß wird.

Der Reinigungsschaber lässt sich zur Reinigung von Grill- oder Kochflächen aus Glaskeramik, Glaskeramik-Kaminsichtscheiben, Herdsichtblenden aus Glas, Glasoberflächen von Fenstern, Türen und Möbeln und bei Keramik-Oberflächen, wie Heizplatten oder Fliesen, verwenden.

Weitere vorteilhafte Ausgestaltungen der Erfindung ergeben sich aus den Unteransprüchen und der folgenden Beschreibung. In der Zeichnung zeigen:
Figur 1 einen Reinigungsschaber perspektivisch,
Figur 2 einen Schnitt des Reinigungsschabers der Fig.1 und
Figur 3 ein weiteres Ausführungsbeispiel eines Reinigungsschabers im Schnitt.

Ein Reinigungsschaber weist einen Handgriffbereich 1 und einen Arbeitsbereich 2 auf. Die beiden Bereiche 1,2 sind einstückig aus einem temperaturbeständigen duroplastischen Kunststoffmaterial geformt. Als duroplastisches Kunststoffmaterial wird vorzugsweise ein Melaminharz oder ein ungesättigtes Polyesterharz verwendet, das zur Erhöhung der mechanischen Festigkeit glasfaserverstärkt sein kann. Die Herstellung erfolgt in einem Fließpressverfahren.

Zur Prüfung der Eignung des duroplastischen Kunststoffmaterials in Verbindung mit einer Glaskeramikplatte wurden folgende Versuche auf einer Glaskeramikplatte der Marke "Ceran" durchgeführt:

### 1. Versuch:

Die Glaskeramikplatte wurde auf verschiedene praxisrelevante Kochtemperaturen erhitzt und zwei Stücke des duroplastischen Kunststoffs wurden etwa 25 min aufgelegt, um zu simulieren, ob bei einem versehentlichen Liegenlassen des Schabers im Heißbereich ein Schaden der Glaskeramik-Kochfläche auftreten würde. Es konnte kein chemischer Angriff der Glaskeramikplatte festgestellt werden.

### 2. Versuch:

Die Glaskeramikplatte wurde auf eine Oberflächentemperatur von 240°C erhitzt, drei Löffel Zucker wurden aufgegeben und die karamelisierende Masse wurde etwa 10 min mit duroplastischen Kunststoffteilen gerührt. Auch bei diesem Versuch konnte überraschenderweise keine Schädigung der Glaskeramikplatte festgestellt werden. Die Kunststoffteile ließen sich anschließend wieder leicht reinigen.

Nach den Versuchen waren die Kunststoffteile teilweise geringfügig angebrannt; jedoch hinterließen sie auf der Glaskeramikplatte keinerlei Schäden bzw. Rückstände.

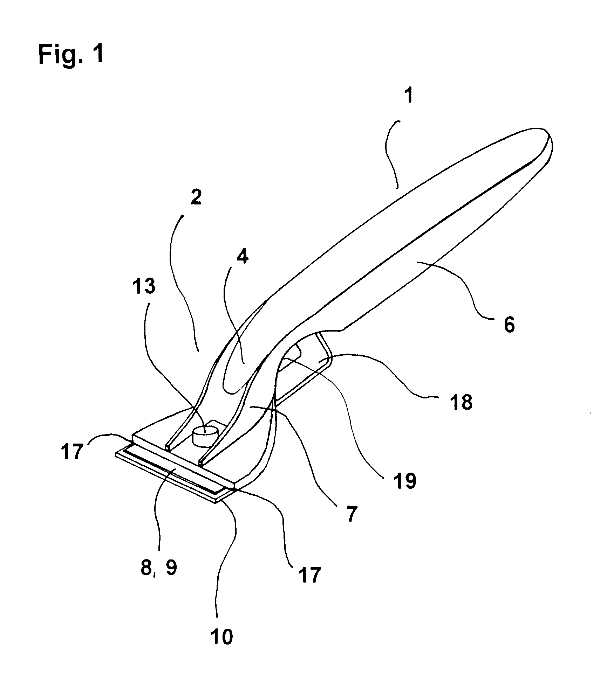

Der Handgriffbereich 1 ist aus duroplastischem Kunststoffmaterial derart ergonomisch gestaltet, dass er sicher und angenehm in der Hand des Benutzers liegt (vgl. Fig. 1). Durch einen S-förmigen Übergangsbereich 3 zwischen dem Handgriffbereich 1 und dem Arbeitsbereich 2 ist erreicht, dass der Arbeitsbereich 2 eine Daumenauflage 4 für die den Handgriffbereich 1 umfassende Hand des Benutzers bildet. Die Daumenauflage 4 gewährleistet, dass der Benutzer einen für das Schaben hinreichend starken Druck auf den Arbeitsbereich 2 ausüben kann.

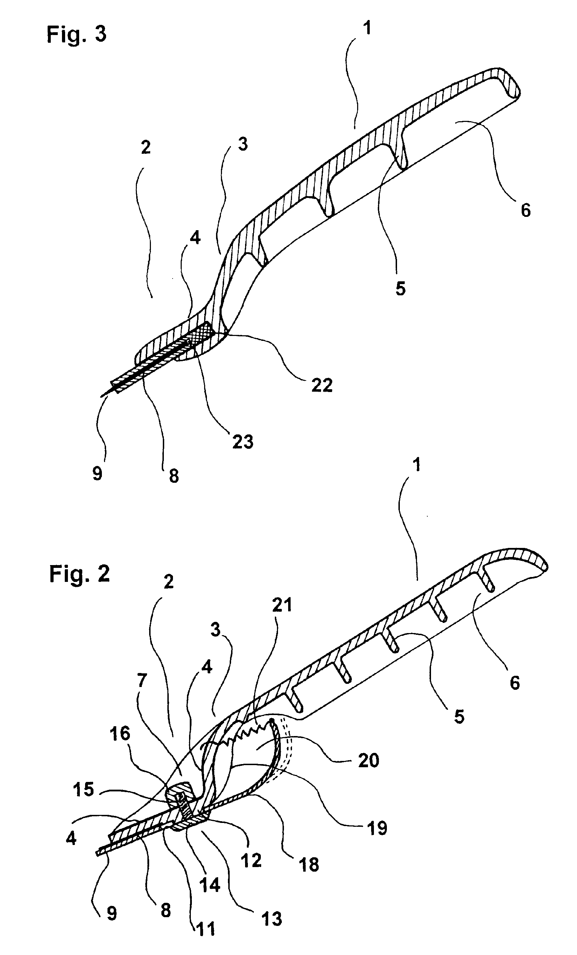

Zur Versteifung sind im Handgriffbereich 1 Versteifungsrippen 5 gestaltet, die der Oberseite 1' des Handgriffbereichs 1 abgewandt sind. Die Versteifungsrippen 5 erstrecken sich zwischen seitlichen Stegen 6 des Handgriffbereichs 1. Weitere Versteifungsrippen 7 sind bei der Ausführung nach Figur 1 und 2 vorgesehen, um den Arbeitsbereich 2 gegenüber dem Handgriffbereich 1 zu stabilisieren. Zwischen den Versteifungsrippen 7 besteht die Daumenauflage 4.

Der Arbeitsbereich 2 ist so gestaltet, dass an ihn eine metallische Klinge 8, beispielsweise eine handelsübliche Rasierklinge, auswechselbar festlegbar ist. Der Arbeitsbereich 2 weist hierfür entsprechende Aus- oder Anformungen auf.

Die Klinge 8 überragt mit ihrer Schneide 9 den Arbeitsbereich 2. Um aus Sicherheitsgründen die Schneide 9 bei Nichtbenutzung des Reinigungsschabers abzudecken, ist bei der Ausführung nach Figur 1 und 2 eine verschiebliche Schutzblende 10 vorgesehen. Die Schutzblende 10 kann aus Metall oder ebenfalls einem duroplastischen Kunststoff bestehen. Die Schutzblende 10 ist mittels wenigstens eines Langloches 11 an einem oder mehreren an den Arbeitsbereich 2 angeformten Sockel 12 längsverschieblich geführt und mittels eines Befestigungselements 13 am Arbeitsbereich 2 längsverschieblich festgelegt, wobei die Schutzblende 10 die Klinge 8 gegen den Arbeitsbereich 2 hält. Das Befestigungselement 13 kann aus einem Nietkopf 14 mit Schraubgewinde 15 und einer Hutmutter 16 bestehen (vgl. Fig.2). Es können jedoch auch andere funktionsentsprechende Befestigungselemente 13 vorgesehen sein.

Für die Halterung und die längsverschiebliche Verbindung der Schutzblende 10 mit dem Arbeitsbereich 2 kann nur ein Sockel 12 und entsprechend ein Langloch 11 genügen. In diesem Fall sind am Arbeitsbereich 2 zwei Ränder 17 (vgl.Fig.1) angeformt, die eine Längsführung der Schutzblende 10 gewährleisten.

An die Schutzblende 10 ist einstückig ein Rückzugselement 18 angeformt, das so gestaltet ist, dass es mit dem Zeigefinger der den Handgriffbereich 1 umgreifenden Hand des Benutzers derart zurückgezogen werden kann, dass die Schutzblende 10 die Schneide 9 der Klinge 8 freigibt, sie also nicht mehr abdeckt. Das Rückzugselement 18 ist von einer mit der Schutzblende 10 einstückigen Umbiegung gebildet. Damit der Zeigefinger des Benutzers leicht an dem Rückzugselement 18 angreifen kann, ist zwischen dem Handgriffbereich 1 und dem Arbeitsbereich 2 eine Verschmälerung 19 gestaltet. In den so zwischen der Verschmälerung 19 und dem Rückzugselement 18 gebildeten Freiraum 20 kann der Zeigefinger des Benutzers greifen, um die Schutzblende 10 zurückzuziehen und damit die Schneide 9 der Klinge 8 freizugeben.

In die die Schneide 9 abdeckende Stellung gelangt die Schutzblende 10 unter Federwirkung. Hierfür ist beispielsweise eine Zugfeder 21 vorgesehen, die einerseits am Rückzugselement 18 und andererseits am Handgriffbereich 1 oder am Arbeitsbereich 2 oder am übergangsbereich 3 festgelegt ist. Die Zugfeder 21 oder ein entsprechendes Federelement ist bevorzugt so angeordnet, dass sie die Finger der den Reinigungsschaber ergreifenden Hand nicht stört. Anstelle der Zugfeder 21 kann auch eine Druckfeder vorgesehen sein, die zwischen einer der Versteifungsrippen 7 und dem Rückzugselement 18 wirkt. Wenn die Schutzblende 10 oder das Rückzugselement 18 aus einem Material mit geeigneten Federeigenschaften besteht, kann das freie Ende des Rückzugselements 18 in eine Aussparung des Handgriffbereichs 1 in Verschieberichtung der Schutzblende 10 formschlüssig greifen, wobei dann eine separate Zugfeder überflüssig ist.

Beim Ausführungsbeispiel nach Figur 3 ist die Klinge 8 in einem Aufnahmekörper 22 angeordnet, der insbesondere aus Metall besteht. Der Aufnahmekörper 22 ist in eine an dem Arbeitsbereich 2 ausgebildete Tasche 23, vorzugsweise auswechselbar, eingesetzt, und in dieser vom duroplastischen Kunststoffmaterial gehalten.

Am Handgriffbereich 1 und/oder am Arbeitsbereich 2 können im Herstellungsverfahren des Reinigungsschabers durch Wechseleinsätze des Herstellungswerkzeugs auf einfache Weise kundenspezifische Schriftzüge eingeprägt werden. Der Reinigungsschaber lässt sich infolge der Verwendung von duroplastischem Kunststoffmaterial in unterschiedlichen Farben und Farbeffekten, beispielsweise durch Zugabe von metallischem Flitter und/oder anderen Pigmenten herstellen.

Um den Reinigungsschaber in der Nähe seines Einsatzbereichs abstellen, ablegen oder aufhängen zu können, können am Handgriffbereich 1 und/oder am Arbeitsbereich 2 entsprechende Halteelemente vorgesehen sein. Dem jeweiligen Halteelement ist ein Halterungsteil zugeordnet, das im Einsatzbereich, also nahe bei der Glaskeramik-Kochfläche, festgelegt ist. Das Halterungsteil ist vorzugsweise aus dem gleichen und gleich gefärbten duroplastischen Kunststoff wie der Handgriffbereich 1 und der Arbeitsbereich 2 des Reinigungsschabers hergestellt.

Die Verbindungsmöglichkeit zwischen dem Reinigungsschaber und dem Halterungsteil kann von einer Magnethalterung und/ oder von einer Rasthalterung gebildet sein. Bei einer Magnethalterung ist ein Permanentmagnetstück im Reinigungsschaber oder im Halterungsteil integriert und ein entsprechendes Metallstück ist im Halterungsteil bzw. im Reinigungsschaber integriert. Bei einer rastenden Verbindungsmöglichkeit zwischen dem Reinigungsschaber und dem Halterungsteil sind am Reinigungsschaber und am Halterungsteil entsprechend zugeordnete Rastausformungen gestaltet.

Um den Reinigungsschaber nahe bei seinem Einsatzbereich auf sinnfällige Weise bereitzuhalten, ist es auch möglich, den Reinigungsschaber in seinem Handgriffbereich 1 und/oder seinem Arbeitsbereich 2 mit Halteelementen zu versehen, die an solche Halterungsteile angepasst sind, die für Küchenwerkzeuge ohnehin nahe des Einsatzbereichs, nämlich einer Kochfläche, üblich sind; dies sind beispielsweise magnetische Hängeleisten für Messer bzw. Gewürzbehälter oder Stangen zur Aufhängung von Kochlöffeln und anderen Kochwerkzeugen.

Das Halterungsteil kann mit dem Handgriffbereich 1 und dem Arbeitsbereich 2 im gleichen Verfahrensschritt, beispielsweise in einem Multikavitäten-Werkzeug einteilig oder zweiteilig hergestellt werden.

## Patentansprüche

1. Reinigungsschaber, der einen Handgriffbereich und einen Arbeitsbereich zur Aufnahme einer Klinge aufweist und der Temperaturen über 130°C, insbesondere 240°C und höher, einer Glasoberfläche oder glasähnlichen Oberfläche standhält,
**dadurch gekennzeichnet,**
**dass** der Handgriffbereich (1) und der Arbeitsbereich (2) aus einem duroplastischen Kunststoffmaterial geformt sind.

2. Reinigungsschaber nach Anspruch 1,
**dadurch gekennzeichnet,**
**dass** das duroplastische Kunststoffmaterial ein Melaminharz oder ein ungesättigtes Polyesterharz ist.

3. Reinigungsschaber nach Anspruch 1 oder 2,
**dadurch gekennzeichnet,**
**dass** das Kunststoffmaterial glasfaserverstärkt ist.

4. Reinigungsschaber nach einem der vorhergehenden Ansprüche,
**dadurch gekennzeichnet,**
**dass** der Handgriffbereich(1) ergonomisch geformt ist.

5. Reinigungsschaber nach einem der vorhergehenden Ansprüche,
**dadurch gekennzeichnet,**
**dass** der Handgriffbereich(1) und/oder der Arbeitsbereich (2) Versteifungsrippen(5;7) aufweist.

6. Reinigungsschaber nach einem der vorhergehenden Ansprüche,
**dadurch gekennzeichnet,**
**dass** der Arbeitsbereich(2) eine Daumenauflage(4) für eine den Handgriffbereich(1) umfassende Hand bildet.

7. Reinigungsschaber nach einem der vorhergehenden Ansprüche,
**dadurch gekennzeichnet,**
**dass** in dem Handgriffbereich(1) und/oder dem Arbeitsbereich(2) Halteelemente vorgesehen sind, mit denen der Reinigungsschaber an einem Halterungsteil bei Nichtbenutzung für eine Benutzung bereithaltbar ist.

8. Reinigungsschaber nach einem der vorhergehenden Ansprüche,
**dadurch gekennzeichnet,**
**dass** die Klinge(8) durch eine verschiebliche Schutzblende (10) abdeckbar ist.

9. Reinigungsschaber nach Anspruch 8,
**dadurch gekennzeichnet,**
**dass** die Schutzblende(10) ein Rückzugselement(18) aufweist, an dem sie mit dem Zeigefinger einer den Handgriffbereich(1) umfassenden Hand derart zurückziehbar ist, dass sie die Schneide(9) der Klinge(8) freigibt.

10. Reinigungsschaber nach Anspruch 8,9,
**dadurch gekennzeichnet,**
**dass** die Schutzblende(10) derart federbelastet ist, dass sie die Schneide(9) der Klinge(8) unter Federwirkung abdeckt.

11. Reinigungsschaber nach einem der vorhergehenden Ansprüche 8 bis 10,
**dadurch gekennzeichnet,**
**dass** die Schutzblende(10) mittels eines Befestigungselements(13) an dem Arbeitsbereich(2) verschieblich gehalten ist.

12. Reinigungsschaber nach einem der vorhergehenden Ansprüche 1 bis 7,
**dadurch gekennzeichnet,**
**dass** die Klinge(8) in einem Aufnahmekörper(22) sitzt, der in eine Tasche(23) des Arbeitsbereichs(2) eingesetzt ist.
